# EUROPEAN PATENT APPLICATION

(11) **EP 2 224 766 A1**
(43) Date of publication of application: **01.09.2010**
(21) Application number: 10154523.4
(22) Date of filing: 24.02.2010
(51) Int. Cl.: H04W 16/14

(54) **Method, apparatus and system for interference avoidance in a femtocell network**

(30) Priority: 27.02.2009 US 156032 P; 11.02.2010 US 704045
(71) Applicant: Industrial Technology Research Institute, Chutung Hsinchu 31040 (TW)
(72) Inventor: Chou, Chie-Ming, 436, Taichung County (TW); Chen, Yung-Han, 300, Hsinchu City (TW)
(74) Representative: Becker Kurig Straus

(57) **Abstract**

A method of providing interference avoidance in a femtocell network may include receiving, at a femtocell base station defining a femtocell coverage area, an allocation of reserved resources for control signaling and data transmission in which the allocation is received from a macro cell base station defining a macro cell coverage area. The femtocell base station may be located and the femtocell includes a portion of the macro cell coverage area. The method may further include enabling usage of the reserved resources by the femtocell base station responsive to receipt of the allocation to provide interference avoidance with respect to femtocell and macro cell communications. The method may further include disabling usage of the reserved resources by the macro cell base station responsive to the allocation of the reserved
resources.

## Description

### CROSS REFERENCE TO RELATED APPLICATION

This application claims the benefit of U.S. Provisional Application No. 61/156,032, filed February 27, 2009, the contents of which are incorporated herein in their entirety.

### TECHNOLOGICAL FIELD

Embodiments of the present invention relate generally to communication technology and, more particularly, relate to an apparatus, method and a system for providing interference avoidance in a femtocell network.

### BACKGROUND

In order to provide easier or faster information transfer and convenience, telecommunication industry service providers are continually developing improvements to existing networks. For example, the evolved universal mobile telecommunications system (UMTS) terrestrial radio access networks (UTRAN and E-UTRAN), the GERAN (GSM/EDGE) system and the like are being developed along with advancements related to Worldwide Interoperability for Microwave Access (WiMAX), Wireless Municipal Access Network (WirelessMAN) and other technologies.

In many legacy wireless communication networks, base stations (often referred to as BSs or BTSs) typically serve as wireless communication access points for a wireless communication device that may be referred to as a subscriber station (SS), a mobile station (MS), or user equipment (UE). A wireless communication device could be a fixed device such as a personal computer (PC) or a mobile device such as a cellular telephone, laptop computer, or other mobile communication device.

A recent focus in relation to wireless broadband access networks has been on improving performance with respect to mobile devices. As a result, the concept of making local or sub-communication stations (e.g., femto base stations) available to users has been introduced. A femto BS may be a user installed access point providing coverage to a corresponding femtocell that is located within a larger cell (e.g., macro cell) defined by the coverage area of a network installed BS (e.g., a macro BS). In this regard, the femto BS may provide in-home (or business) mobility with improved data rates and quality of service (QoS) as compared to a macro BS, which may be loaded heavily from communications with other MSs and/or may be shielded somewhat by buildings or other obstructions with respect to an in-home user's MS. In many instances, the femto BS may access its respective wireless communication network via a wired communication mechanism such as a digital subscriber line (DSL). Accordingly, the femto BS may not load the macro BS in whose macro cell the femto BS may be located. Thus, a femto BS may actually increase macro BS capacity by reducing backhaul.

However, in spite of employing femto BSs, issues may arise in relation to interference with the macro BS or even other femto BSs. Accordingly, it may be desirable to develop improved mechanisms for providing interference avoidance in a network employing femtocells.

### BRIEF SUMMARY

A method, apparatus and computer program product are therefore provided that may enable the provision of a mechanism for providing interference avoidance in a network employing femtocells.

In an exemplary embodiment, a method of providing interference avoidance in a femtocell network is provided. The method may include receiving, at a femtocell base station defining a femtocell coverage area, an allocation of reserved resources for control signaling and data transmission in which the allocation is received from a macro cell base station defining a macro cell coverage area. The femtocell base station may be located and the femtocell includes a portion of the macro cell coverage area. The method may further include enabling usage of the reserved resources by the femtocell base station responsive to receipt of the allocation to provide interference avoidance with respect to femtocell and macro cell communications. The method may also include disabling usage of the reserved resources by the macro cell base station responsive to the allocation of the reserved resources.

In another exemplary embodiment, an apparatus for providing interference avoidance in a femtocell network is provided. The apparatus may include a processor. The processor may be configured to receive, at a femtocell base station defining a femtocell coverage area, an allocation of reserved resources for control signaling and data transmission in which the allocation is received from a macro cell base station defining a macro cell coverage area. The femtocell base station may be located and the femtocell includes a portion of the macro cell coverage area. The apparatus may further be configured to enable usage of the reserved resources by the femtocell base station responsive to receipt of the allocation to provide interference avoidance with respect to femtocell and macro cell communications. The apparatus may be further configured to disable usage of the reserved resources by the macro cell base station responsive to the allocation of the reserved resources.

In an exemplary embodiment, a system for providing interference avoidance in a femtocell network is provided. The system may include a macro cell defined by a macro cell base station and a femtocell defined by a femto cell base station positioned within the macro cell. The femtocell base station may be configured to receive an allocation of reserved resources for control signaling and data transmission from the macro cell base station, enable usage of the reserved resources only by the femtocell base station responsive to receipt of the allocation to provide interference avoidance with respect to femtocell and macro cell communications, and disable usage of the reserved resources by the macro cell base station responsive to the allocation of the reserved resources.

In an exemplary embodiment, another apparatus for providing interference avoidance in a femtocell network is provided. The apparatus may include a processor. The processor may be configured to receive, at a femtocell base station defining a femtocell coverage area, an allocation of resources for control signaling and data transmission. The allocation is received from a macro cell base station defining a macro cell coverage area in which the femtocell base station is located. The femtocell includes a portion of the macro cell coverage area. The processor may be further configured to provide at least one indicator to at least one mobile device in which the at least one indicator indicates the allocation to the at least one mobile device. The processor may also be configured to enable usage of the allocated resources by the femtocell base station and the at least one mobile device responsive to receipt of the allocation.

In another exemplary embodiment, another method for providing interference avoidance in a femtocell network is provided. The method may include receiving, at a femtocell base station defining a femtocell coverage area, an allocation of resources for control signaling and data transmission. The allocation is received from a macro cell base station defining a macro cell coverage area in which the femtocell base station is located.
The femtocell includes a portion of the macro cell coverage area. The method further includes providing at least one indicator to at least one mobile device in which the at least one indicator indicates the allocation to the at least one mobile device. The method may also include enabling usage of the allocated resources by the femtocell base station and the at least one mobile device responsive to receipt of the allocation.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:

FIG. 1 illustrates examples of interference that may be encountered in a femtocell network;

FIG. 2 illustrates a typical network including a macro cell associated with a macro cell base station (BS) and femtocells associated with corresponding femtocell BSs according to an exemplary embodiment of the present invention;

FIG. 3 illustrates a block diagram of initiating femtocell zone reservation in the downlink (DL) according to an exemplary embodiment of the present invention;

FIG. 4 illustrates a block diagram of initiating femtocell zone reservation in the uplink (UL) according to an exemplary embodiment of the present invention;

FIG. 5 illustrates the control structure of femtocell zone applications according to an exemplary embodiment of the present invention;

FIG. 6 is an example of the signal flow associated with designation of a femtocell zone according to an exemplary embodiment of the present invention;

FIG. 7 illustrates the control structure of femtocell zone applications according to another exemplary embodiment of the present invention;

FIG. 8 illustrates the control structure of femtocell zone applications according to the exemplary embodiment of FIG. 7;

FIG. 9 is an example of an apparatus for providing interference avoidance in a femtocell network according to an exemplary embodiment of the present invention; and

FIG. 10 is a flowchart according to an exemplary method for providing interference avoidance in a femtocell network according to an exemplary embodiment of the present invention.

### DETAILED DESCRIPTION

Some embodiments of the present invention will now be described more fully hereinafter with reference to the accompanying drawings, in which some, but not all embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout.

When deploying femtocell BSs in a wireless network, the femtocell BSs will typically interact with macro cell BSs. Due to the limited bandwidth of wireless networks in general, a femtocell BS may use the same carrier frequency as a macro cell BS in some instances. As a result, interference may be experienced with respect to served MSs and performance reductions may be experienced. Additionally, some femtocell BS may only be accessible for specific MSs. For those inaccessible MSs that enter the coverage area of a femtocell BS, a large interference may be experienced that may cause existing connections to crash or otherwise be lost.

Some embodiments of the present invention may avoid or otherwise mitigate the effects of interference. In this regard, for example, a coordinated region called a femtocell zone may be created. A femtocell BS may then be enabled to borrow a resource region from a neighboring macro cell and then schedule the services for MSs' transmissions. From a macro cell BS's perspective, the resource region is reserved for the usage of a particular femtocell BS and thus, the macro cell BS may not allocate any MSs' transmission in this region. In this manner, interference may be avoided by the coordination of the resource region. Example embodiments of the invention may also provide corresponding downlink and uplink controls to support operations involving determining how to indicate the femtocell zone and the allocation assignment for MSs in the femtocell zone. In some embodiments, a shared random access channel may also be applied for handling the network entry process.

As indicated above, there is a growing interest among operators to deploy broadband access networks with small scale, femtocell BSs that may be employed to improve the service coverage and provide better broadband experience for users accessing the network from their home and/or small offices or other shielded or otherwise hard to reach areas with respect to macro BSs. A femtocell is typically a low-power wireless access point that operates in the licensed spectrum to connect standard mobile devices to a mobile operator's networks such as by using landline (e.g., residential DSL or cable broadband) connections. The spectrum employed by the femtocell BS could be separate or identical to that employed in the macro cell.

Some benefits of femtocell networks may include, from the operator's viewpoint, (1) reducing backhaul capacity requirements; (2) increasing wireless capacity; or (3) reducing coverage holes and create new converged services. Example benefits from the customer's viewpoint may include: (1) providing superior in-building coverage and quality without a change in phones; and (2) providing one number and one phone and location specific pricing. Additionally, a femtocell BS may typically be a plug-and-play product. Thus, for example, when initializing, a femtocell BS may measure the neighboring environment and make configurations itself to optimize the network. The configurations may include determinations regarding frequency assignment, interference control, etc. When providing services, there may be two kinds of femtocell including, for example, a close-access femtocell that allows registered MSs to access or an open-access femtocell that allows MSs to access without registration. In this context, registration denotes that a MS may have a pre-existing contract with a system operator and thus, the MS may need some setup process with the femtocell. Within a particular macro cell coverage area, there could be tens/hundreds of femtocells deployed.

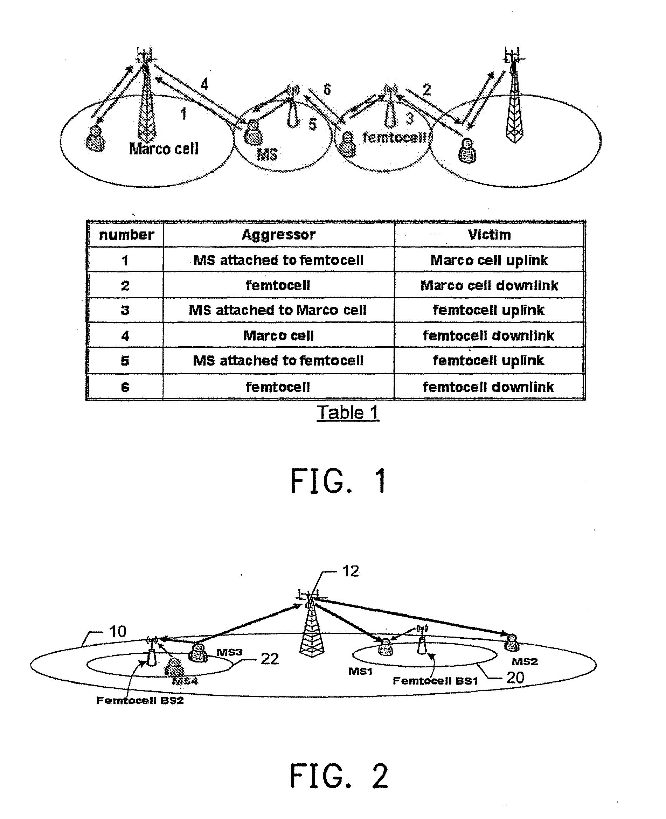

In a conventional wireless cellular network, a cell planning scheme is typically employed to assign operating parameters including carrier frequency, power, bandwidth, etc. for individual macro cell BSs. A frequency re-use concept is also applied to improve overall network performance given the limited wireless resources. In the planning process, operators make on-the-spot investigations for acquiring information useful in making the assignment decisions. However, femtocell deployment typically involves plug-and-play installation scenarios, so legacy cell planning may not be appropriate. Instead, a self-organization scheme may be used to find a usable frequency with regard to resources for femtocell BS's operations. In this regard, a time division mechanism (TDM) or a frequency division mechanism (FDM) could be used to avoid co-usage. However, because of relatively large number of femtocell BSs that could be employed within a particular macro cell, it may be difficult to avoid the repeated usage of frequencies/resources for a femtocell and a macro cell. When this happens, various kinds of interference may be encountered, six examples of which are shown in FIG. 1, which includes Table 1. In various scenarios, any one of the femtocell, macro cell, MS in a femtocell and MS in a macro cell could be an aggressor to cause interference for macro/femtocell downlink and uplink transmissions as shown in Table 1. Notably, FIG. 1 is not drawn to scale and is drawn to show snapshots of various situations. Thus, FIG. 1 is not meant to be an accurate representation of the size or positioning of a femtocell relative to a macro cell.

Some embodiments of the present invention may provide a concept of reserved radio resources for femtocell BS's usage with associated operations to provide a non-interference transmission for MSs in a femtocell BS. Accordingly, employment of exemplary embodiments of the present invention may provide for more efficient resource partitioning for femtocell and macro cell networks along with the provision of an expectation that high throughput may be achieved while avoiding or mitigating some of the interference modes shown in FIG. 1. As such, embodiments of the present invention may include a method of requesting and controlling specific resource allocations in a macro cell for a femtocell BS's usage. With this method, interference between a femtocell and a macro cell may be avoided or mitigated and users may enjoy a high data throughput.

FIG. 2 illustrates a typical network including a macro cell 10 associated with a macro cell BS 12, a first femtocell 20 associated with femtocell BS1 representing a first femto BS and a second femtocell 22 associated with femtocell BS2 representing a second femto BS. FIG. 2 also shows several MSs including MS1, MS2, MS3 and MS4 positioned within the network. When a femtocell BS powers up (e.g., femtocell BS2), the femtocell BS may connect to the network such as through a residential broadband connection (e.g., DSL or a cable broadband connection). The femtocell BS may then engage in self organizing functions intended to enable the femtocell BS to automate the configuration of operating parameters and to optimize network performance, coverage and capacity. The configurations may include cell initialization, neighbor discovery, femtocell attributes, coverage and capacity optimization and/or the like.

One function performed during configuration is searching for a usable channel that handles interference management and optimization. The best interference avoidance is to find a clear channel for access. A clear channel may refer to a carrier frequency with associated resources. However, if there is a large number of femtocell BSs in usage within a particular macro cell, it may be difficult to find a clear channel for access. Accordingly, it may be inevitable that a femtocell BS may need to use the same channel (i.e., a co-channel) with the macro cell BS 12. Unfortunately, when a co-channel is used, the introduction of interference becomes increasingly likely.

As shown in FIG. 2, there may be some cases that are worse than others. For example, when the location of a femtocell BS such as femtocell BS1 is close to the macro cell BS 12, the downlink power of the macro cell BS 12 may interfere with the downlink power of the femtocell BS1. Thus, for example, MS1, which is served by femtocell BS1, may receive a strong downlink power from the macro cell BS 12 that may interfere with the downlink power received from femtocell BS1, which serves MS1. This scenario may be detected during femtocell BS initialization.

A second example scenario that may be problematic may correspond to a situation in which an inaccessible MS (i.e., an MS that is shielded from good communication with the macro cell BS 12) enters the coverage area of a femtocell BS that is farther away from the macro cell BS 12. In this situation, the macro cell BS 12 may recommend that the MS increase its uplink transmitting power. Hence, the uplink power of the inaccessible MS may interfere with the uplink power of an accessible MS and make transmissions fail. As an example, MS3 may be served by the macro cell BS 12 and may not be allowed to enter the femtocell BS2. Because of the longer distance to the macro cell BS 12, the macro cell BS 12 may request MS3 to transmit with a higher power. The transmission from MS3 with higher power may interfere with uplink power from MS4 which is served by femtocell BS2. This second type of scenario may happen dynamically and may be dependent on the location of MSs served by an overlapped macro cell BS.

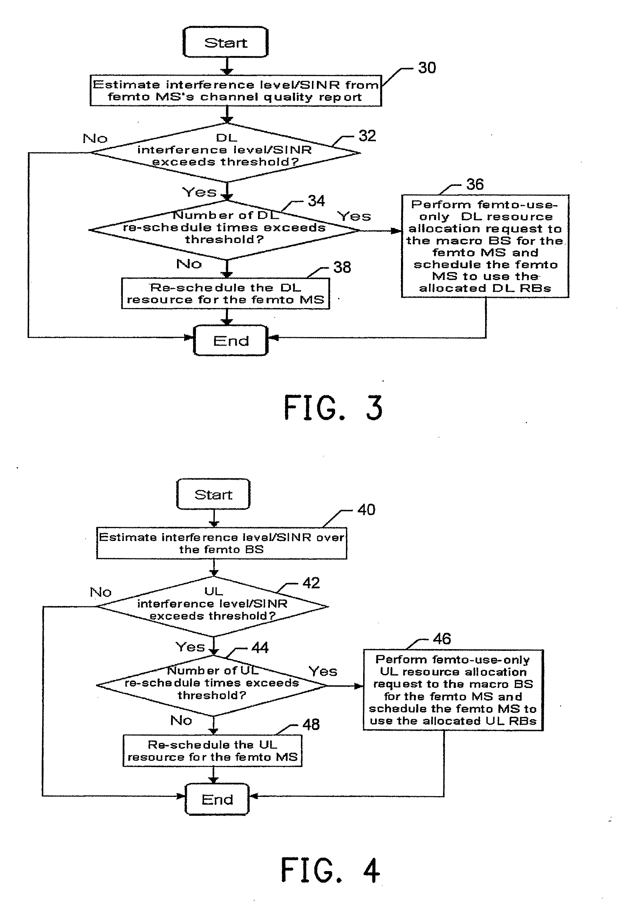

Embodiments of the present invention may introduce the concept of reserved radio resources for femtocell BS usage. This concept may be employed in at least the two example situations described above. Accordingly, a femtocell zone may be defined as a region which was originally used by a macro cell BS. However, when a newly developed, deployed or operating femtocell BS finds that there is no clear channel to provide a good transmission for its serving MSs, then the femtocell BS may request a neighboring macro cell to re-schedule and/or reserve one of its resources for the femtocell BS's transmission. Once the femtocell BS detects that it could not provide good transmission for its serving MSs, which may be caused by noise or interference from the macro cell BS, the femtocell BS may re-schedule the femto subscriber to other resource blocks (RBs) or normal operation regions, or the femtocell BS may request a resource reservation from the macro cell BS. The request messages may contain the information or parameters to assist in providing the allocation such as required resource quantity (e.g., throughput or resource blocks), interference level, signal-to-interference-ratio (SINR), and/or femtocell BS location. As such, for example, the request messages may in some cases include a requested allocation size determined based on link quality between the femtocell BS and the MS, a MS resource bandwidth request, or capabilities of the femtocell BS. Moreover, the request messages may define one or more parameters of bandwidth, time, data quantity, transmission capability, signal strength, and channel quality. Some example diagrams of downlink and uplink initiation of femtocell zone reservation are shown in FIGS. 3 and 4.

FIG. 3 illustrates a block diagram of initiating femtocell zone reservation (i.e., the designation of a resource region) in the downlink (DL) according to an exemplary embodiment of the present invention. FIG. 4 illustrates a block diagram of initiating femtocell zone reservation in the uplink (UL) according to an exemplary embodiment of the present invention. As can be seen from FIGS. 3 and 4, the basic operations are similar for both uplink and downlink cases. In this regard, at operations 30 and 40, an estimate is made with regard to the interference level/SINR from the MS's channel quality report regarding the femto cell. A determination is then made at operations 32 and 42 as to whether the downlink (operation 32) or uplink (operation 42) interference level/SINR is above a threshold. If the interference level/SINR is below the threshold, then the operation terminates. However, if the interference level/SINR is above the threshold, then a determination is made as to whether the number of downlink (operation 34) or uplink (operation 44) re-schedule times exceeds a threshold. If the number of re-schedule times exceeds the threshold, a femto-use-only resource allocation request is performed for downlink resources (operation 36) or uplink resources (operation 46). The request may be provided to the macro cell BS for the corresponding femto MS. Additionally, the femto MS may be scheduled to use the allocated downlink or uplink RBs such that a resource region (or femtocell zone) is designated for femtocell usage.

In some embodiments, if the threshold of number of UL/DL re-schedule times is zero, the femtocell BS will skip the re-schedule of interference avoidance and directly request to reserve the femtocell zone, which defines resources allocated for femto-use-only. The femtocell BS may obtain the information from the macro cell BS over the air by measurement or via the backhaul to estimate the parameters in the request message. After receiving the request, the macro cell BS may respond with the grant result, which may be a grant indicating the position of granted resources represented by RBs, subframe number, timing offset, and subcarrier number. However, in some cases, the grant result may be a grant denied response to reject the request. The femtocell BS may send a request for the macro cell BS to release the femto-use-only resource allocation.

For the period during which the macro cell BS agrees to grant the resource region or femtocell zone to the femtocell BS, the macro cell BS may not allocate its MSs in the corresponding region. As such, the corresponding region defines resources that are reserved for femtocell Bs usage. A femtocell BS may then begin scheduling transmissions relative to the resource region after receiving the granted resources associated therewith. In some cases, the femtocell zone or resource region may be shared with multiple femtocell BSs to acquire the frequency-reuse benefit. Furthermore, the configuration of the femtocell zone or resource region could be dynamic. If there are no MSs under a femtocell BS's coverage, or if interference problems are resolved, then the femtocell zone or resource region may be released to the macro cell BS.

Once the femtocell zone is used, a femtocell BS may be enabled to place an indicator in its broadcast channel to identify for its serving MSs the potential region for their transmissions that is associated with the femtocell zone. The indicator may indicate the allocation (e.g., symbol offset, symbol length, sub-carrier offset, and sub-carrier length) of the femtocell zone. Inside the femtocell zone, another indictor may be given to point out the corresponding data location for individual MSs. From the perspective of an MS, the MS may first read the broadcast message and therefore be made aware of the allocation of the femtocell zone. The MS may also be enabled to decode and acquire its individual data based on the indictor in the femtocell zone. When the femtocell zone is applied, the femtocell BS may further share the random access channel with macro cell BS. Thus, for example, specific random access codes may be negotiated between the macro cell BS and the femtocell BS. Those codes may be broadcasted by the femtocell BS to incoming MSs. The corresponding MSs may send the codes on the random access channel which has the same location as the macro cell BS. Due to previous negotiation, only the femtocell BS may process those specific codes and perform corresponding uplink controls. Oppositely, when a macro cell BS determines that a specific code is sent on the random access channel, the macro cell BS may bypass the codes. Accordingly, by employing the resource region or femtocell zone of embodiments of the present invention, the required uplink resources for femtocell BS operations may be reserved for femtocell BS utilization the corresponding spectrum.

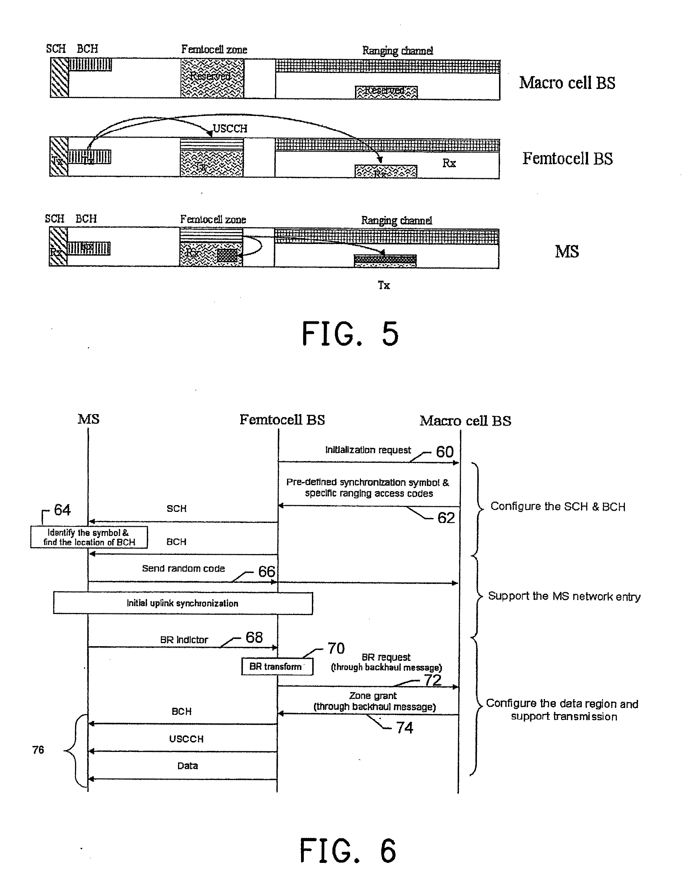

Some exemplary situations that may be encountered will now be described by way of example and not of limitation. For example, when a newly developed femtocell BS is unable to find a clear channel, the newly developed femtocell BS may run an initialization to setup its operating parameters. During the initialization, the femtocell BS may find every channel has been already used by other BSs and may further detect a strong signal coming from a macro cell BS. Accordingly, the femtocell BS may negotiate both control channel assignment and data channel assignment with the macro cell BS. FIG. 5 illustrates the control structure of femtocell zone applications according to an exemplary embodiment. In this regard, the synchronization control channel (SCH), which may be orthogonal with each other channel, may be aligned in the same location. A femtocell BS may send a request message through the backhaul or through the air to get a synchronization symbol, e.g., a preamble in IEEE802.16 system. After receiving the request message, the macro cell BS may reserve a resource region and give a pre-defined synchronization symbol according to the request by the femtocell BS. Each pre-defined synchronization symbol may be mapped into a specific cell ID and an associated resource region. The associated resource region may then be available for use for allocating the broadcast control channel (BCH) of a femtocell BS. When an incoming MS reads the SCH, through the pre-defined symbol, the incoming MS may be made aware of the location of the BCH and read the broadcast message of the femtocell BS.

The macro cell BS may also designate other specific random access codes for the femtocell BS. A femtocell BS may then broadcast those codes in its BCH and indicate the location of the random access channel, which location may be aligned with the random access channel of the macro cell BS. After becoming aware of codes through the BCH, a MS may be enabled to send corresponding specific codes in the random access channel. However, only the femtocell BS will process the code and perform access preparations due to reservation of the corresponding femtocell zone. Oppositely, when a macro cell BS finds a specific code is sent on the random access channel, it may omit the code, again due to the reservation of the corresponding femtocell zone.

If a MS finishes the network entry process and DL/UL transmission is required, the MS may initiate a bandwidth request process to request a resource region for communication of the corresponding data. When a femtocell BS receives the request, it may consider link conditions, femtocell BS capabilities and the requirements and send a message to the macro cell BS. In the message, the femtocell BS may provide information for negotiation with the macro cell BS to request another femtocell zone for data transmission. When the femtocell zone is granted, the femtocell BS may be enabled to give indications regarding the femtocell zone in the BCH of the femtocell BS in order to notify MSs where the femtocell zone is allocated. In the femtocell zone, a control channel such as, for example, a unicast services control channel (USCCH), MAP, A-MAP, etc., may be placed in a dedicated location to further indicate the associated data for individual MSs. A MS may then read the control channel in the femtocell zone and be made aware of the data location of to decode it.

FIG. 6 is an example of the signal flow associated with designation of a femtocell zone according to an exemplary embodiment. During femtocell BS configuration, a femtocell BS being configured may negotiate with its respective macro cell to request a resource region at operation 60. A pre-defined synchronization symbol and random access codes may then be designated and the femtocell BS may operate its broadcast services on the designated or granted resource region. The symbol and codes may be provided to the femtocell BS at operation 62. During the network entry process, a particular MS may acquire the random access code and related uplink allocation information to identify the symbol and find the location of the BCH at operation 64. Thereafter, the MS may send the code in a random access channel, which is used for the femtocell BS and the macro cell BS at operation 66. Based on previous negotiation, only the femtocell BS will process the specific code and support following network entry. When network entry is completed, the MS could request the bandwidth for its transmissions based on knowledge of the number of bits needed to transmit the data to be transmitted via the BR indicator at operation 68. The femtocell BS may then perform a BR transform at operation 70 and provide a BR request through a backhaul message at operation 72. In this regard, although the MS knows the number of bits to be sent, the femtocell BS may also be aware of channel quality and may therefore transform the request by the MS into a number of bits that considers channel conditions or other factors to enable the correct number of resource units to be requested from the resource region based on the number of bits to be communicated. Similar to the BCH transmission, the resources of data transmissions conducted may be granted from the macro cell BS based on the resource region reserved for the femtocell at operation 74. The allocation information of the data region may be given in the BCH and then the MS may receive the USCCH (or MAP, A-MAP, etc.) to perform associated transmission at collective operations indicated at reference numeral 76.

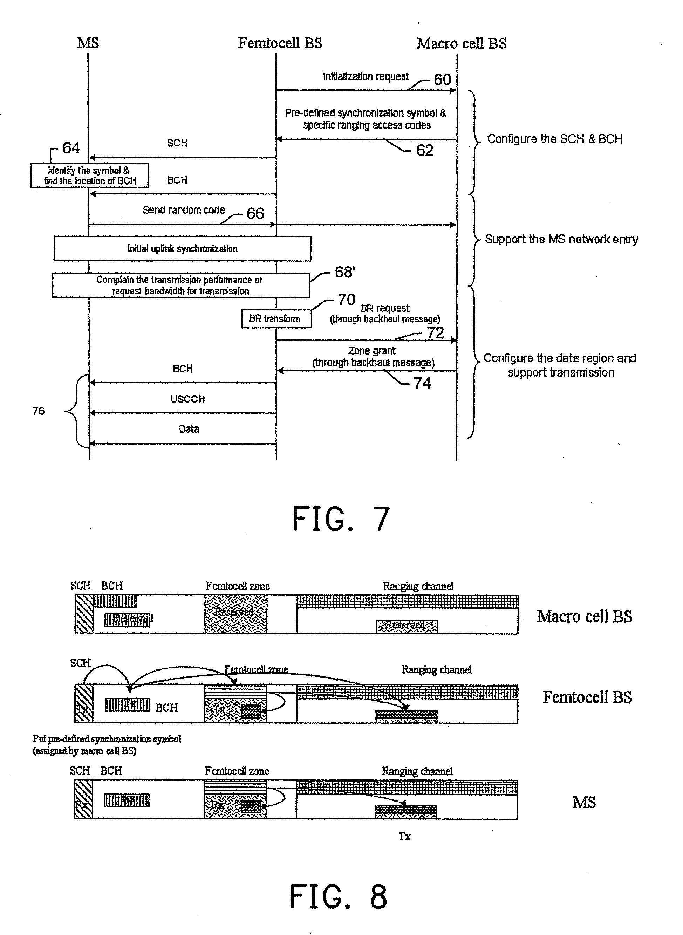

When a newly developed or operating femtocell BS finds a limited and acceptable channel, the femtocell BS may operate in similar fashion to the example described above in which a clear channel could not be found except that the broadcast channel of the femtocell BS may be allocated by the femtocell BS itself. In this regard, because the broadcast channel designated in the resource allocation uses a more robust modulation and coding, such a channel may be able to avoid strong interference. Therefore, a femtocell BS could pick up an acceptable channel to construct its broadcast channel without any negotiations with the macro cell BS. The random access channel may also be allocated without aligning with the macro cell BS in such cases. However, MSs typically request high data transmission, and finding a channel capable of supporting such a request may not always be possible. Hence, a femtocell zone could also be applied for data transmission in this case. The method for requesting a femtocell zone in such a case may be similar to that described above in connection with FIG. 6, except that the bandwidth request associated with operation 68 above may be replaced with a complaint regarding transmission performance as indicated in operation 68' in FIG. 7. FIG. 8 also indicates the control structure associated with this exemplary case.

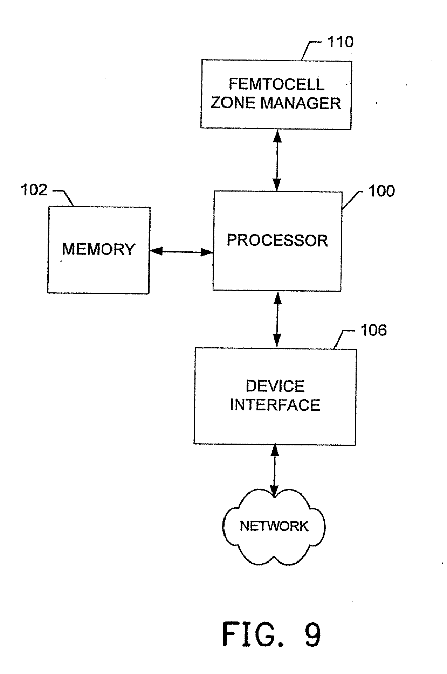

In an exemplary embodiment, an apparatus within the femtocell BS may be configured to perform functions associated with managing or controlling several of the operations described above. FIG. 9 illustrates an example of an apparatus for providing interference avoidance in a femtocell network. In this regard, the apparatus may include or otherwise be in communication with a processor 100, a memory 102, and a device interface 106. The memory 102 may include, for example, volatile and/or non-volatile memory and may be configured to store information, data, applications, instructions or the like for enabling the apparatus to carry out various functions in accordance with exemplary embodiments of the present invention. For example, the memory 102 could be configured to buffer input data for processing by the processor 100 and/or store instructions for execution by the processor 100.

The processor 100 may be embodied in a number of different ways. For example, the processor 100 may be embodied as various processing means such as processing circuitry embodied as a processing element, a coprocessor, a controller or various other processing devices including integrated circuits such as, for example, an ASIC (application specific integrated circuit), an FPGA (field programmable gate array), a hardware accelerator, or the like. In an exemplary embodiment, the processor 100 may be configured to execute instructions stored in the memory 102 or otherwise accessible to the processor 100.

Meanwhile, the device interface 106 may be any means such as a device or circuitry embodied in either hardware, software, or a combination of hardware and software that is configured to receive and/or transmit data from/to a network and/or any other device or module in communication with the apparatus. In this regard, the device interface 106 may include, for example, an antenna (or multiple antennas) and supporting hardware and/or software for enabling communications with a wireless communication network. In fixed environments, the device interface 106 may alternatively or also support wired communication. As such, the device interface 106 may include a communication modem and/or other hardware/software for supporting communication via cable, digital subscriber line (DSL), universal serial bus (USB) or other mechanisms.

In an exemplary embodiment, the processor 100 may be embodied as, include or otherwise control a femtocell zone manager 110. The femtocell zone manager 110 may be any means such as a device or circuitry embodied in hardware, software or a combination of hardware and software (e.g., processor 100 operating under software control) that is configured to perform the corresponding functions of the femtocell zone manager 110, as described below.

In an exemplary embodiment, the femtocell zone manager 110 may operate responsive to execution of instructions, code, modules, applications and/or circuitry for requesting allocation of a resource region defining a femtocell zone in some cases. However, regardless of whether the resource region reserving resources for the femtocell zone is initiated (e.g., due to femtocell BS request or independent action of the macro cell BS), the femtocell zone manager 110 may thereafter be configured to receive an allocation of reserved resources for control signaling and data transmission from the macro cell BS in which the femtocell BS is located. The femtocell zone manager 110 may then enable usage of the reserved resources only by the femtocell BS responsive to receipt of the allocation to provide interference avoidance with respect to femtocell and macro cell communications. In an exemplary embodiment, the femtocell zone manager 110 may also be configured to release all or a portion of the reserved resources associated with the allocation in response to an expiration of the allocation or a lack of femtocell BS demand for the allocation.

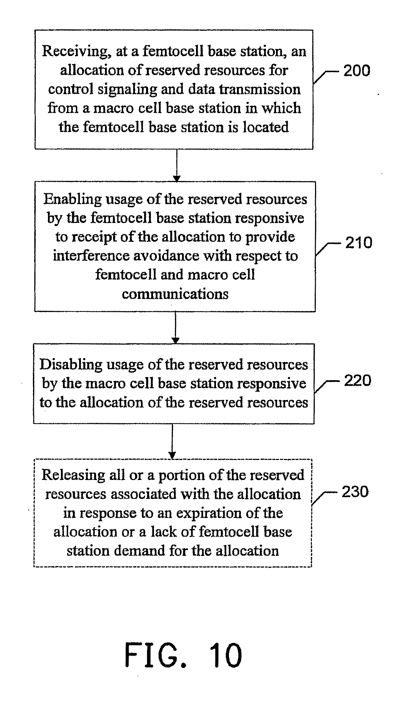

FIG. 10 is a flowchart of a system, method and program product according to exemplary embodiments of the invention. It will be understood that each block or step of the flowcharts, and combinations of blocks in the flowcharts, can be implemented by various means, such as hardware, firmware, and/or software including one or more computer program instructions. For example, one or more of the procedures described above may be embodied by computer program instructions. In this regard, the computer program instructions which embody the procedures described above may be stored by a memory and executed by a processor. As will be appreciated, any such computer program instructions may be loaded onto a computer or other programmable apparatus (i.e., hardware) to produce a machine, such that the instructions which execute on the computer or other programmable apparatus create means for implementing the functions specified in the flowchart block(s). These computer program instructions may also be stored in a computer-readable electronic storage memory that can direct a computer or other programmable apparatus to function in a particular manner, such that the instructions stored in the computer-readable memory produce an article of manufacture including instruction means which implement the function specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowcharts block(s).

Accordingly, blocks of the flowchart support combinations of means for performing the specified functions, combinations of steps for performing the specified functions and program instruction means for performing the specified functions. It will also be understood that one or more blocks of the flowchart, and combinations of blocks in the flowchart, can be implemented by special purpose hardware-based computer systems which perform the specified functions or steps, or combinations of special purpose hardware and computer instructions.

In this regard, one embodiment of a method for providing interference avoidance in a femtocell network as provided in FIG. 10 may include receiving, at a femtocell base station, an allocation of reserved resources for control signaling and data transmission from a macro cell base station in which the femtocell base station is located at operation 200. The method may further include enabling usage of the reserved resources by the femtocell base station responsive to receipt of the allocation to provide interference avoidance with respect to femtocell and macro cell communications at operation 210. The method may also include disabling usage of the reserved resources by the macro cell base station responsive to the allocation of the reserved resources at operation 220.

In some embodiments, the method may include further optional operations, an example of which is shown in dashed lines in FIG. 10. Optional operations may be performed in any order and/or in combination with each other in various alternative embodiments. As such, the method may further include releasing all or a portion of the reserved resources associated with the allocation in response to an expiration of the allocation or a lack of femtocell base station demand for the allocation at operation 230.

In some embodiments, certain ones of the operations above may be modified or further amplified as described below. It should be appreciated that each of the modifications or amplifications below may be included with the operations above either alone or in combination with any others among the features described herein. In this regard, for example, receiving the allocation may be performed responsive to provision of a request from the femtocell base station to the macro cell base station in which the femtocell base station is located or responsive to independent action of the macro cell base station. In some embodiments, signaling associated with the allocation is exchanged between the femtocell base station and the macro cell base station via a wired or wireless communication interface. When exchanged via a wireless communication interface, the femtocell base station may act as a mobile station with respect to requesting the allocation from the macro cell base station. In some embodiments, the allocation is received responsive to mobile device initiation, femtocell base station initiation, femtocell network configuration, femtocell network re-configuration, or a determination by the femtocell base station that additional resources are desirable for service provision. In some cases, receiving the allocation comprises receiving designated resource units including a frequency allocation (e.g., frequency division multiplexing (FDM) resources), a time allocation (e.g,. time division multiplexing (TDM) resources), a frequency-time block (e.g., FDM-TDM mixed resources), a power level allocation (e.g., spatial domain resources, particularly when the femtocell is near the edge of the macro cell coverage area), or a code level allocation (e.g., code division multiplexing (CDM) resources). In an exemplary embodiment, the allocation received may be a static, semi-static or dynamic allocation.

In an exemplary embodiment, an apparatus for performing the method of FIG. 10 above may comprise a processor (e.g., the processor 100) configured to perform some or each of the operations (200-230) described above. The processor may, for example, be configured to perform the operations (200-230) by performing hardware implemented logical functions, executing stored instructions, or executing algorithms for performing each of the operations.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method for interference avoidance in a femtocell network, **characterised by** comprising:
receiving, at a femtocell base station defining a femtocell coverage area, an allocation of reserved resources for control signaling and data transmission, the allocation being received from a macro cell base station defining a macro cell coverage area in which the femtocell base station is located, the femtocell comprising a portion of the macro cell coverage area(FIG. 10, 200);
enabling usage of the reserved resources by the femtocell base station responsive to receipt of the allocation to provide interference avoidance with respect to femtocell and macro cell communications(FIG. 10, 210); and
disabling usage of the reserved resources by the macro cell base station responsive to the allocation of the reserved resources(FIG. 10, 220).

2. The method of claim 1, wherein receiving the allocation is performed responsive to provision of a request from the femtocell base station to the macro cell base station in which the femtocell base station is located.

3. The method of claim 2, further comprising providing the request including a requested allocation size determined based on link quality between the femtocell base station and a mobile device, a mobile device resource bandwidth request, or capabilities of the femtocell base station.

4. The method of claim 2, wherein the request defines one or multiple parameters of bandwidth, time, data quantity, transmission capability, signal strength, and channel quality.

5. The method of claim 1, wherein receiving the allocation is performed responsive to independent action of the macro cell base station in which the femtocell base station is located.

6. The method of claim 1, wherein signaling associated with the allocation is exchanged between the femtocell base station and the macro cell base station via a wired communication interface or a wireless communication interface, and wherein the femtocell base station acts as a mobile device with respect to requesting the allocation from the macro cell base station.

7. The method of claim 1, wherein the allocation is received responsive to mobile device initiation, femtocell base station initiation, femtocell network configuration, femtocell network re-configuration, or a determination by the femtocell base station to provision additional resources.

8. The method of claim 1, wherein receiving the allocation comprises receiving designated resource units including a frequency allocation, a time allocation, a frequency-time block, a power level allocation, or a code level allocation.

9. The method of claim 1, wherein receiving the allocation comprises providing at least one indicator to indicate the allocation to at least one mobile device wherein the indicator is appended to at least one of a broadcast channel and the allocation.

10. The method of claim 1, further comprising releasing all or a portion of the reserved resources associated with the allocation in response to an expiration of the allocation or a lack of femtocell base station demand for the allocation.

11. An apparatus comprising a processor, **characterised in that** the apparatus is configured to:
receive, at a femtocell base station defining a femtocell coverage area, an allocation of reserved resources for control signaling and data transmission, the allocation being received from a macro cell base station defining a macro cell coverage area in which the femtocell base station is located, the femtocell comprising a portion of the macro cell coverage area(FIG. 10, 200);
enable usage of the reserved resources by the femtocell base station responsive to receipt of the allocation to provide interference avoidance with respect to femtocell and macro cell communications(FIG. 10, 210); and
disable usage of the reserved resources by the macro cell base station responsive to the allocation of the reserved resources(FIG. 10, 220).

12. The apparatus of claim 11, wherein one or multiple methods of claim 1 to claim 10 are executed by the apparatus to perform interference avoidance.

13. A system for interference avoidance in a femtocell network, **characterised by** comprising:
a macro cell(FIG. 2, 10) defined by a coverage area of a macro cell base station(FIG. 2, 12); and
a femtocell(FIG. 2, 20) defined by a coverage area of a femto cell base station positioned within the macro cell(FIG. 2, 10), the femtocell(FIG. 2, 20) comprising a portion of the macro cell coverage area,
wherein the femtocell base station is configured to:
receive an allocation of reserved resources for control signaling and data transmission from the macro cell base station(FIG. 10, 200);
enable usage of the reserved resources by the femtocell base station responsive to receipt of the allocation to provide interference avoidance with respect to femtocell and macro cell communications(FIG. 10, 210); and
disable usage of the reserved resources by the macro cell base station responsive to the allocation of the reserved resources(FIG. 10, 220).

14. The system of claim 13, wherein receiving the allocation is performed responsive to provision of a request from the femtocell base station to the macro cell base station or responsive to independent action of the macro cell base station.

15. A method for interference avoidance in a femtocell network, **characterised by** comprising:
receiving, at a femtocell base station defining a femtocell coverage area, an allocation of resources for control signaling and data transmission, the allocation being received from a macro cell base station defining a macro cell coverage area in which the femtocell base station is located, the femtocell comprising a portion of the macro cell coverage area(FIG. 10, 200);
providing at least one indicator to at least one mobile device, the at least one indicator indicating the allocation to the at least one mobile device; and
enabling usage of the allocated resources by the femtocell base station and the at least one mobile device responsive to receipt of the allocation(FIG. 10, 200).

16. The method of claim 15, wherein providing the at least one indicator comprises appending the at least one indicator to at least one of a broadcast channel and the allocation.

17. The method of claim 15, wherein providing the at least one indicator indicating the allocation comprises indicating quantity and location of the allocated resources.

18. An apparatus comprising a processor, **characterised in that** the apparatus is configured to:
receive, at a femtocell base station defining a femtocell coverage area, an allocation of resources for control signaling and data transmission, the allocation being received from a macro cell base station defining a macro cell coverage area in which the femtocell base station is located, the femtocell comprising a portion of the macro cell coverage area(FIG. 10, 200);
provide at least one indicator to at least one mobile device, the at least one indicator indicating the allocation to the at least one mobile device; and
enable usage of the allocated resources by the femtocell base station and the at least one mobile device responsive to receipt of the allocation(FIG. 10, 210).

19. The apparatus of claim 18, wherein one or multiple methods of claim 15 to claim 17 are executed by the apparatus to perform interference avoidance.
